## Europäisches Patentamt

## European Patent Office

## Office européen des brevets

(19)

(11) Veröffentlichungsnummer: **0 140 222**
A2

(12) # EUROPÄISCHE PATENTANMELDUNG

(21) Anmeldenummer: 84112054.6

(22) Anmeldetag: 09.10.84

(51) Int. Cl.⁴: **B 60 J 9/00**

(30) Priorität: 22.10.83 DE 3338495

(43) Veröffentlichungstag der Anmeldung:
08.05.85 Patentblatt 85/19

(84) Benannte Vertragsstaaten:
FR GB IT SE

(71) Anmelder: BAYERISCHE MOTOREN WERKE
Aktiengesellschaft
Postfach 40 02 40 Petuelring 130
D-8000 München 40(DE)

(72) Erfinder: Ball, Wilfried
Breslauerstrasse 24
D-8312 Dingolfing(DE)

(72) Erfinder: Hautmann, Edmund
Leitzachtalstrasse 34
D-8165 Fischbachau(DE)

(72) Erfinder: Hens, Peter
Schillerweg 11
D-8046 Garching(DE)

(72) Erfinder: Ritzl, Fritz
Mathildenstrasse 29
D-8033 Planegg(DE)

(72) Erfinder: Siebold, Hermann
Brunnerstrasse 5
D-8000 München(DE)

(72) Erfinder: Stelzer, Heinz
Am Stutenanger 6
D-8042 Oberschleissheim(DE)

(74) Vertreter: Dexheimer, Rolf
Bayerische Motoren Werke Aktiengesellschaft Postfach
40 02 40 Petuelring 130 - AJ-31
D-8000 München 40(DE)

(54) Vorrichtung zum Schutz des Türeinstiegbereiches eines Fahrzeugs bei geöffneter Tür, insbesondere vor Regenwasser oder Schnee.

(57) Die Vorrichtung dient zum Schutz des Türeinstiegbereiches eines Fahrzeugs, bei geöffneter Tür, vor Witterungseinflüssen, insbesondere vor Regenwasser oder Schnee. Diese wird durch den oberen Bereich der Tür betätigt und besteht insbesondere aus einem oberhalb der Türöffnung verlagerbaren, nach oben offenen Auffangehälter (2), der mittels Querführungen seitlich verschieblich ist, die aus zwei in den Dachboden hineinragende und daran befestigte Hülsen (4) bestehen, in denen je ein mit dem Auffangbehälter (2) verbundener stabförmiger Gleitstift (5) und je eine den Auffangbehälter (2) in die Auffangstellung belastende Feder (3) gelagert ist. Zur Begrenzung des zulässigen Ausfahrbereiches ist ein Anschlag (6) vorgesehen.

Fig.3

EP 0 140 222 A2

Vorrichtung zum Schutz des Türeinstiegbereiches eines Fahrzeugs bei geöffneter Tür, insbesondere vor Regenwasser oder Schnee

Die Erfindung betrifft eine Vorrichtung zum Schutz des Türeinstiegbereiches eines Fahrzeugs bei geöffneter Tür, insbesondere vor Regenwasser oder Schnee, mit einem durch den oberen Bereich der Tür betätigbaren Auffangelement, das sich beim Öffnen der Tür aus einer innerhalb der Fahrzeugkontur gelegenen Ruhelage in eine außerhalb der Fahrzeugkontur befindliche Auffanglage verlagert.

Aus der deutschen Offenlegungsschrift 22 09 190 ist eine Dichtleiste in einem eine Tür aufnehmenden Ausschnitt eines Fahrzeugs bekannt, die, anstelle einer am Dach befindlichen Regenrinne, zur Vermeidung des Eintritts von Regenwasser in das Wageninnere, eine verlagerbare Dichtungslippe aufweist, die bei geöffneter Tür schräg nach oben bis über die Fahrzeugkontur hinaus zeigt, mit einem dann U-förmigen, nach oben offenen Querschnitt. Diese Art von Regenrinne, die sich beim Öffnen der Tür durch Formänderung der Dichtungslippe bildet, kann gewisse, vom Dach seitlich abfließende Wasserströme sammeln und ableiten.

Von Nachteil ist, daß bei starken Regenfällen der Wasserstrom so anwachsen kann, daß bei offener Tür ein Teil des Wassers über die Dichtungslippe hinaus in das Fahrzeuginnere gelangt, insbesondere bei einem Fahrzeug mit stark
eingezogenem Dach. In diesem Fall kann die Regenrinne,
aufgrund der beschränkten Verlagerbarkeit der Dichtungslippe, auch nicht verhindern, daß Regen direkt in den
Fahrzeuginnenraum fällt. Ein weiterer Nachteil ist, daß
beim Schließen der Tür der von der Dichtlippe aufgefangene, noch nicht verflüssigte Schnee ein zurückverlagern
der Dichtungslippe verhindern kann und möglicherweise so
zwischen Tür und Aufbau gepreßt wird, daß die Tür nicht
ordnungsgemäß einschnappt. Dabei kann es auch vorkommen,
daß die Dichtlippe, insbesondere bei hart gefrorenem
Schnee, einen solchen Schaden erleidet, daß die bestimmungsgemäße Funktion derselben nicht mehr gegeben ist.
Ferner bestehen bei dem für Dichtleisten üblicherweise
verwendeten Material die Gefahren der Versprödung und
Ermüdung, die eine einwandfreie Funktion der Regenrinne
beeinträchtigen.

Der Erfindung liegt die Aufgabe zugrunde, eine Vorrichtung der eingangs genannten Art zu schaffen, die sich
besonders durch Zuverlässigkeit und Witterungsbeständigkeit auszeichnet und die so groß dimensioniert werden
kann, daß der Einstiegsbereich weitgehend vor Witterungseinflüssen, insbesondere vor Regenwasser oder Schnee,
abgeschirmt ist.

Die Aufgabe wird erfindungsgemäß dadurch gelöst, daß das
Auffangelement ein an der Karosserie oberhalb der Türöffnung verlagerbarer        , nach oben offener Auffangbehälter ist. Dies hat die Vorteile, daß sich das Auffangelement so gestalten läßt, daß es weit nach außen verlagerbar ist und so einen möglichst großen Teil des Türeinstiegbereiches vor Witterungseinflüssen abschirmt, ohne
daß zu befürchten ist, daß aufgefangener Niederschlag
durch seine Last das Auffangelement deformiert oder
dieses in seiner Funktion beeinträchtigt.

Von dem Auffangelement aufgefangener Schnee, der beim Schließen der Tür und zurückverlagern des Auffangselements in die Ruhelage mitgenommen wird, kann auch nachträglich in der Ruhelage schmelzen.

Zweckmäßige Ausgestaltungen der Erfindung sind Gegenstand von Unteransprüchen.

Drei Ausführungsbeispiele der Erfindung werden anhand der Zeichnung näher erläutert. Es zeigen:

Fig. 1 eine schematische Fahrzeugdraufsicht, mit einem oberhalb der Türöffnung angedeuteten, seitlich verlagerbaren Auffangbehälter;

Fig. 2 ist eine etwa der Fig. 1 entsprechende Teilansicht der Fahrzeugdraufsicht, mit einem um eine nahezu vertikale Achse schwenkbaren Auffangbehälter;

Fig. 3 stellt einen vertikalen Querschnitt im Bereich des Dachholms einer dritten Ausführungsform dar.

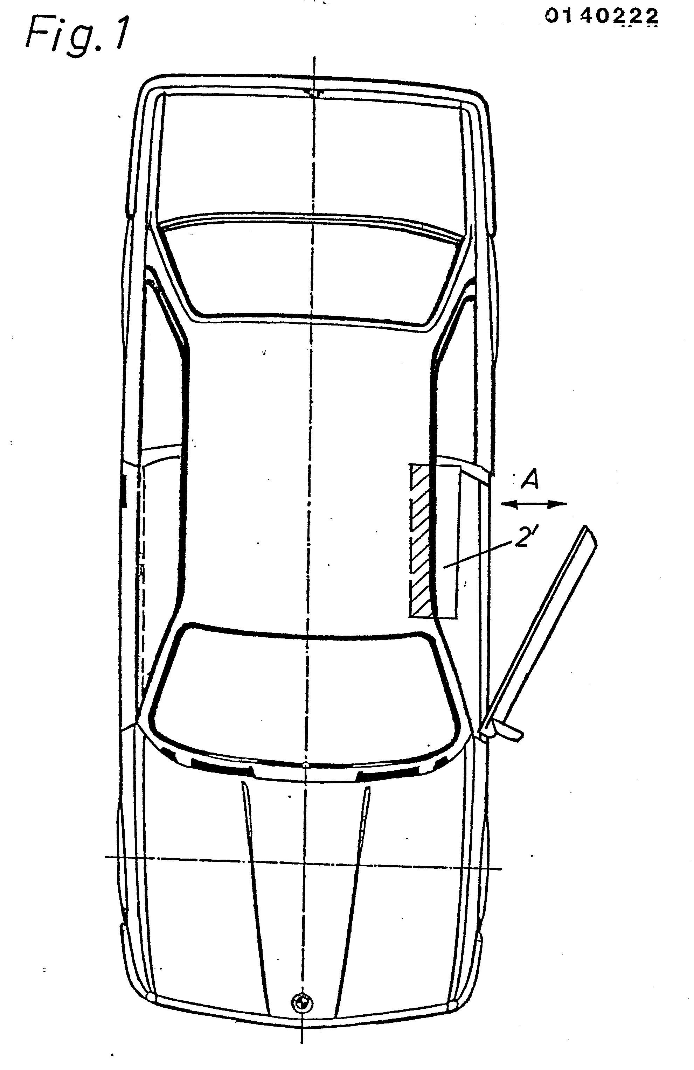

An dem in Fig. 1 in der Draufsicht dargestellten Fahrzeug ist oberhalb des Einstiegbereichs der linken Seitentür ein nach oben offener Auffangbehälter 2' angedeutet, der in Richtung des Doppelpfeiles A seitlich verlagerbar ist.

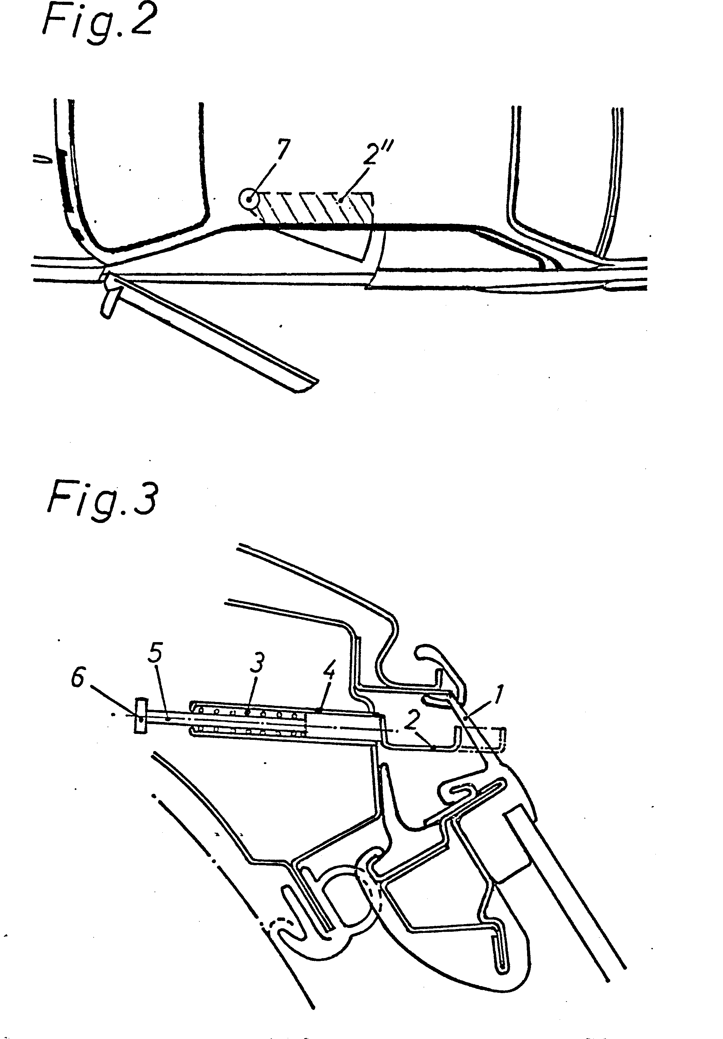

In Fig. 3 ist ein Querschnitt einer im Bereich des Dachholms befindlichen erfindungsgemäßen Vorrichtung dargestellt. Beim Öffnen der Tür gibt die oberhalb der Tür befindliche Dichtungsleiste 1 den Weg frei für den Auffangbehälter 2, der sich unter der Wirkung zweier Federn 3 von einer innerhalb der Fahrzeugkontur befindlichen Ruhelage seitlich in eine außerhalb der Fahrzeugkontur befindliche Auffanglage verlagert. Dies könnte erfindungsgemäß auch durch Schwenken des Auffangbehälters um eine fahrzeugfeste, vorzugsweise vertikale Achse 7 geschehen, wie in Fig. 2 angedeutet.

Die seitliche Führung des Auffangbehälters 2 erfolgt durch zwei in den Dachholm hineinragende und daran befestigte Hülsen 4, in denen je ein mit dem Auffangbehälter 2 verbundener stabförmiger Gleitstift 5 und je eine den Auffangbehälter 2 in die Auffanglage belastende Feder 3 gelagert ist. Der an dem stabförmigen Gleitstift 5 überstehende Kopf 6 wird als Anschlag benutzt, der den zulässigen Ausfahrbereich des Auffangbehälters 2 begrenzt. Der Auffangbehälter 2 ist dabei ein starrer, in Seitenansicht langgestreckter Körper, mit einer dem Dachverlauf angepaßten Form und einem im äußeren Bereich nach oben offenen, U-förmigen Querschnittsprofil. Beim Schließen der Tür verlagert die Dichtungsleiste 1 den Auffangbehälter 2 von der Auffanglage in die Ruhelage, gegen die Wirkung der Feder 3.

1

Patentansprüche

1. Vorrichtung zum Schutz des Türeinstiegbereiches eines Fahrzeugs bei geöffneter Tür, insbesondere vor Regenwasser oder Schnee, mit einem durch den oberen Bereich der Tür betätigbaren Auffangelement, das sich beim Öffnen der Tür aus einer innerhalb der Fahrzeugkontur gelegenen Ruhelage in eine außerhalb der Fahrzeugkontur befindliche Auffanglage verlagert, dadurch gekennzeichnet, daß das Auffangelement ein an der Karosserie oberhalb der Türöffnung verlagerbarer , nach oben offener Auffangbehälter (2, 2', 2") ist.

2. Vorrichtung nach Anspruch 1, dadurch gekennzeichnet, daß der Auffangbehälter (2) gegen die Wirkung wenigstens einer Feder (3) oder gegen seine Schwerkraft in seine Ruhelage verlagerbar ist.

3. Vorrichtung nach Anspruch 1, dadurch gekennzeichnet, daß der Auffangbehälter (2") um eine fahrzeugfeste Achse (7) schwenkbar ist.

4. Vorrichtung nach Anspruch 3, dadurch gekennzeichnet, daß der Auffangbehälter (2") um eine nahezu vertikale Achse (7) schwenkbar ist.

2

5. Vorrichtung nach Anspruch 1, dadurch gekennzeichnet, daß der Auffangbehälter (2) durch Querführungen seitlich verschieblich ist.

6. Vorrichtung nach Anspruch 5, dadurch gekennzeichnet, daß die Querführungen aus mindestens zwei in den Dachholm hineinragende und daran befestigte Hülsen (4) bestehen, in denen je ein mit dem Auffangbehälter (2) verbundener stabförmiger Gleitstift (5) und eine den Auffangbehälter (2) in die Auffangstellung belastende Feder (3) gelagert ist.

7. Vorrichtung nach Anspruch 1, dadurch gekennzeichnet, daß dem Auffangbehälter (2) ein Anschlag (6) zugeordnet ist, der den zulässigen Ausfahrbereich begrenzt.

8. Vorrichtung nach Anspruch 1, gekennzeichnet durch einen Auffangbehälter (2), mit in Seitenansicht langgestreckter, dem Dachverlauf angepaßter Form und einem nach oben offenen U- oder halbrundförmigen Querschnittsprofil.

Fig.1

4/3

0140222

*Fig.2*

*Fig.3*